# EUROPEAN PATENT SPECIFICATION

(11) **EP 4 175 044 B1**
(45) Date of publication and mention of the grant of the patent: **22.04.2026**
(21) Application number: 22742809.1
(22) Date of filing: 18.01.2022
(51) Int. Cl.: H01M 50/383, H01M 50/367, H01M 50/24, A62C 2/04, A62C 3/16, A62C 3/07, H01M 50/204, H01M 50/209, H01M 50/30, H01M 50/308, H01M 50/317, H01M 50/325, H01M 50/342, H01M 50/35, H01M 50/358

(54) **BATTERY PACK WITH IMPROVED FIRE PROTECTION PERFORMANCE**
BATTERIEPACK MIT VERBESSERTER BRANDVERHÜTUNGSFÄHIGKEIT
BLOC-BATTERIE AYANT UNE CAPACITÉ DE PRÉVENTION D'INCENDIE AMÉLIORÉE

(30) Priority: 19.01.2021 KR 20210007560
(43) Date of publication of application: 03.05.2023
(73) Proprietor: LG Energy Solution, Ltd., Seoul 07335 (KR)
(72) Inventor: KIM, Seung-Hyun, Daejeon 34122 (KR); KONG, Yu-Dam, Daejeon 34122 (KR); SHIN, Jin-Kyu, Daejeon 34122 (KR); OH, Young-Hoo, Daejeon 34122 (KR); OK, Seung-Min, Daejeon 34122 (KR); JO, Sang-Hyun, Daejeon 34122 (KR); HONG, Sung-Goen, Daejeon 34122 (KR)
(74) Representative: Hoffmann Eitle
(86) International application number: PCT/KR2022/000940
(87) International publication number: WO 2022/158833

(56) References cited:
- WO-A1-2012/133710
- WO-A1-2020/194965
- CN-U- 208 889 719
- CN-U- 210 110 904
- CN-U- 212 011 077
- DE-A1- 102013 214 495
- JP-A- 2020 113 422
- KR-A- 20120 090 027
- KR-A- 20190 112 580
- KR-B1- 102 067 214
- US-A1- 2005 191 542
- US-A1- 2018 108 892

## Description

### TECHNICAL FIELD

The present disclosure relates to a battery, and more particularly, to a battery pack capable of effectively preventing the occurrence or spread of fire, and an energy storage system including the same.

### BACKGROUND ART

In recent years, as the demand for portable electronic products such as laptops, video cameras and mobile phones has rapidly increased and robots, electric vehicles and the like are being commercialized in earnest, research on high-performance secondary batteries allowing repeatedly charging and discharging has been actively researched.

Currently commercialized secondary batteries include nickel cadmium battery, nickel hydrogen battery, nickel zinc battery, lithium secondary battery, and so on. In particular, the lithium secondary battery has almost no memory effect to ensure free charge and discharge, compared to the nickel-based secondary battery, and the lithium secondary battery is spotlighted due to a very low discharge rate and a high energy density.

The secondary battery may be used alone, but in general, a plurality of secondary batteries are electrically connected to each other in series and/or in parallel in many cases. In particular, the plurality of secondary batteries may be electrically connected to each other and accommodated in one module case, thereby configuring one battery module. In addition, the battery module may be used alone, or two or more battery modules may be electrically connected to each other in series and/or in parallel to configure a higher-level device such as a battery pack.

Recently, as issues such as power shortage or eco-friendly energy have been highlighted, an energy storage system (ESS) for storing the generated power is receiving more attention. Representatively, if such an energy storage system is used, it is easy to construct a system such as a smart grid system, so that it is possible to easily control power supply and demand in a specific area or city.

The battery pack used in an energy storage system may require a very large capacity, compared to a small-sized or medium-sized battery pack. Accordingly, the battery pack may typically include a large number of battery modules. In addition, in order to increase the energy density, the plurality of battery modules are often configured to be densely packed in a very narrow space.

However, if the plurality of battery modules are concentrated in a narrow space as described above, they may be vulnerable to fire. For example, a thermal propagation situation may occur in one battery module, so that high-temperature gas is discharged from at least one battery cell. Moreover, high-temperature sparks may be ejected when the gas is discharged, and the sparks may include active materials or molten aluminum particles that are separated from the electrodes inside the battery cell. If these high-temperature sparks and high-temperature gas meet oxygen, it may lead to a fire in the battery pack.

In particular, when a fire occurs in a specific battery cell or module, it may spread to other neighboring battery cells, battery modules, or battery packs. In particular, since many batteries are concentrated in a narrow space of the energy storage system, if a fire occurs, it is not easy to suppress the fire. Moreover, considering the size and role of the energy storage system, there is a risk that the fire occurring inside the battery pack may cause very serious damage to property and human life. Therefore, even if a thermal propagation situation occurs, it is necessary to prevent this situation from progressing to a fire in a specific battery cell or module.

JP 2020 113422 A concerns a battery pack. The battery pack has a plurality of secondary batteries housed inside a case. The battery pack includes a discharge port, which is provided on a side wall facing the secondary battery for discharging carbon monoxide generated in the case to the outside of the case. The exhaust port is connected to an exhaust duct.

CN 210 110 904 U concerns a lower box body, a battery pack and a vehicle. The lower box body is provided with an accommodating area, and single batteries are accommodated in the accommodating area; the lower box body is further provided with an exhaust port and an exhaust channel which are communicated.

DE 102013 214495 A1 concerns a battery pack for a vehicle, comprising a casing provided with an air inlet and an exhaust outlet, a cooling fan installed inside the casing, an exhaust hood attached to the casing to surround the exhaust outlet of the casing, and a flow path opening/closing mechanism.

### DISCLOSURE

### Technical Problem

The present disclosure is designed to solve the problems of the related art, and therefore the present disclosure is directed to providing a battery pack configured to effectively suppress a fire even when high-temperature gas or sparks are generated in some battery modules due to thermal propagation, and an energy storage system including the same.

However, the technical problems to be solved by the present disclosure are not limited to the above, and other problems not mentioned herein will be clearly understood by those skilled in the art from the following disclosure.

### Technical Solution

In one aspect of the present invention, as defined in claim 1, there is provided a battery pack, comprising: at least one battery module having at least one secondary battery and configured to store and release an energy; a duct provided to at least one side of the battery module and having a discharge hole and inlet hole so that, when a gas is generated from the battery module, the generated gas flows toward the discharge hole; and an opening/closing member located in the discharge hole of the duct. The opening/closing member is configured to open the discharge hole when an internal pressure of the duct is above a predetermined level, and to close the discharge hole and block the inflow of gas at the outside of the duct into the duct when the internal pressure of the duct is below the predetermined level. Said inlet hole faces the battery module, and the discharge hole faces a direction away from the battery module.

Here, in a closed state, the opening/closing member may be configured to block the inflow of oxygen at the outside of the duct into the duct.

In addition, the discharge hole may have a plurality of openings, and the opening/closing member may have a plurality of unit opening/closing portions so that the unit opening/closing portion is located at each opening.

In addition, the opening/closing member may be configured such that at least two unit opening/closing portions open the respective openings at different pressure levels.

In addition, the plurality of openings may be arranged in a vertical direction, and the opening/closing member may be configured such that a unit opening/closing portion located at an upper side among the at least two unit opening/closing portions opens the opening in a higher pressure level than a unit opening/closing portion located at a lower side.

In addition, the unit opening/closing portion may include an elastic member, respectively, and the unit opening/closing portion located at an upper side among the at least two unit opening/closing portions may be configured to include an elastic member having a higher elastic modulus than the unit opening/closing portion located at a lower side.

In addition, the opening/closing member may include an inner opening/closing portion and an outer opening/closing portion.

In addition, in a closed state, the opening/closing member may be configured to move only in one direction to be changed into an opened state.

In addition, at least one of the duct and the opening/closing member may have a sealing portion formed to surround the periphery of the discharge hole.

In another aspect of the present invention, as defined in claim 10, there is also provided an energy storage system, comprising the above battery pack.

### Advantageous Effects

According to the present disclosure, it is possible to effectively prevent a fire from occurring in a battery pack.

In particular, according to an embodiment of the present disclosure, even if a high-temperature gas or spark is generated due to a thermal propagation phenomenon in a specific battery module or a specific battery cell included in the battery pack, it is possible to prevent it from progressing to a fire.

Moreover, according to an embodiment of the present disclosure, it is possible to block the inflow of oxygen into the battery pack. Therefore, by excluding oxygen, which is one of the three elements of combustion, it is possible to fundamentally block the occurrence of combustion, namely a fire, inside the battery pack.

In addition, according to an embodiment of the present disclosure, even if a fire occurs inside the battery pack, the inflow of additional oxygen is blocked so that the fire can be easily extinguished without spreading.

In addition, the present disclosure may have various other effects, and such effects will be described in each embodiment, or any effect that can be easily inferred by those skilled in the art will not be described in detail.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically showing a configuration of a battery pack according to an embodiment of the present disclosure.
FIG. 2 is an exploded perspective view showing some components of FIG. 1.
FIG. 3 is a perspective view schematically showing one battery module included in the battery pack according to an embodiment of the present disclosure.
FIG. 4 is a partial perspective view in which some components of FIG. 3 are separated or removed.
FIG. 5 is a perspective view showing a duct in the battery pack shown in FIGS. 1 and 2, which is viewed in a different direction.
FIG. 6 is a diagram schematically showing a gas discharge flow direction in the battery pack according to an embodiment of the present disclosure, which is viewed from an upper side of the battery pack.
FIG. 7 is an enlarged view showing a portion A1 of FIG. 1.
FIG. 8 is a diagram showing that an opening/closing member is opened in the configuration of FIG. 7.
FIG. 9 is a diagram schematically showing a gas discharging configuration in a state where the opening/closing member is opened in the battery pack according to an embodiment of the present disclosure.
FIG. 10 is a diagram schematically showing an external gas blocking configuration in a state where the opening/closing member is closed in the battery pack according to an embodiment of the present disclosure.
FIG. 11 is a diagram schematically showing some components of a battery pack according to another embodiment of the present disclosure.
FIG. 12 is a cross-sectional view schematically showing some components of a battery pack according to still another embodiment of the present disclosure.
FIG. 13 is a perspective view schematically showing some components of a battery pack according to still another embodiment of the present disclosure.
FIG. 14 is a diagram schematically showing positions of a first sealing portion and a second sealing portion, when the opening/closing member closes the duct, in the configuration of FIG. 13.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto within the scope of the appended claims.

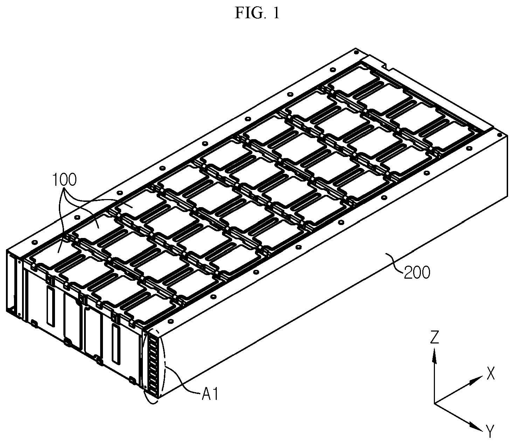

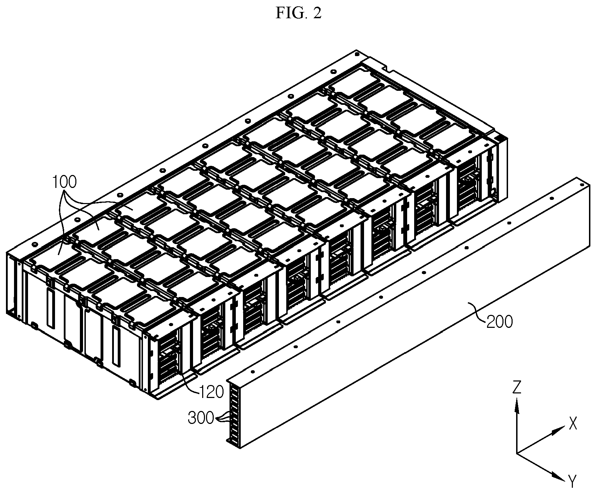

FIG. 1 is a perspective view schematically showing a configuration of a battery pack according to an embodiment of the present disclosure, and FIG. 2 is an exploded perspective view showing some components of FIG. 1.

Referring to FIGS. 1 and 2, the battery pack according to the present disclosure includes a battery module 100, a duct 200, and an opening/closing member 300.

The battery module 100 is configured to include at least one secondary battery to store and release an energy. In addition, one or more battery modules are included in the battery pack. In particular, in order to improve the capacity and/or output of the battery pack, a plurality of battery modules 100 may be included in the battery pack as shown in FIGS. 1 and 2. In this case, the plurality of battery modules 100 may be arranged in at least one direction. For example, FIGS. 1 and 2 show that eight battery modules 100 are arranged in an X-axis direction.

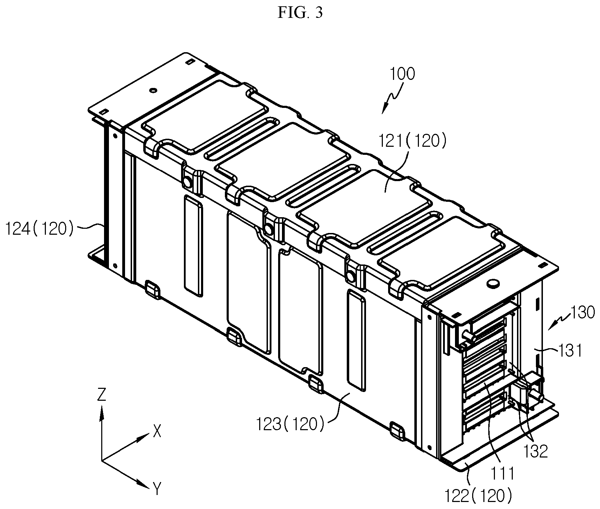

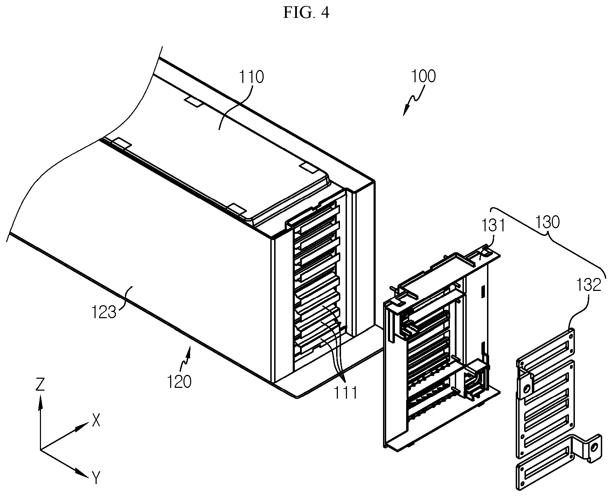

An example of a more specific configuration of the battery module 100 is shown in more detail in FIGS. 3 and 4.

FIG. 3 is a perspective view schematically showing one battery module 100 included in the battery pack according to an embodiment of the present disclosure, and FIG. 4 is a partial perspective view in which some components of FIG. 3 are separated or removed.

Referring to FIGS. 3 and 4, the battery module 100 may include a secondary battery 110 (a battery cell), a module case 120 and a bus bar assembly 130.

Here, the secondary battery 110 may include an electrode assembly, an electrolyte and a battery case. Although the pouch-type secondary battery is illustrated in FIGS. 3 and 4, other types of secondary batteries, such as a cylindrical battery or a prismatic battery, may be included in the battery module 100.

The secondary battery 110 may be included in plurality. For example, as shown in the drawings, the battery assembly may be configured such that a plurality of pouch-type secondary batteries 110 are stacked in a vertical direction. In this case, electrode leads 111 of the batteries may be in direct contact with each other or may be electrically connected through a bus bar or the like.

The module case 120 may be configured to accommodate at least one secondary battery 110 in an inner space thereof. For example, the module case 120 may include an upper plate 121, a lower plate 122, a side plate 123 and a rear plate 124, as shown in the drawings. In addition, the plurality of plates may be coupled to each other to accommodate the battery assembly in a limited inner space. Here, some plates included in the module case 120, such as the lower plate 122 and the side plate 123, may be configured to be integrated with each other. In this case, the integrated shape of the lower plate 122 and the side plate 123 may be approximately a U shape.

In particular, the module case 120 may be configured in a sealed form other than the front portion. Alternatively, the module case 120 may be configured such that the front and rear portions are open, and the other portions are closed.

The bus bar assembly 130 may be coupled to the front open portion of the module case 120. The electrode lead 111 of the battery assembly may be located at the front portion of the module case 120. In addition, the bus bar assembly 130 may be coupled to the electrode lead 111. As a more specific example, the bus bar assembly 130 may include a bus bar housing 131 and a module bus bar 132 as shown in FIGS. 3 and 4.

Here, the bus bar housing 131 may be made of an electrically insulating material, for example a plastic material. In addition, the bus bar housing 131 may be configured such that the module bus bar 132 is seated and fixed thereon. In addition, the module bus bar 132 may be made of an electrically conductive material, for example, a metal material. In addition, the module bus bar 132 may be configured to electrically connect the electrode leads 111 to each other or to be connected to the electrode lead 111 to transmit sensing information to a control unit such as a battery management system (BMS).

The battery module 100 included in the battery pack according to the present disclosure may be configured such that only one side, namely the front side, is opened and the remaining portions are closed. For example, as shown in FIGS. 3 and 4, only the front portion of the battery module 100 located at an end in the +Y-axis direction may be opened. In this case, when gas or sparks are generated inside the battery module 100, the gas may be discharged only to the open portion, namely to the front side. Alternatively, the battery module 100 may be configured such that both the front side and the rear side are open and the remaining portions are closed. In this case, in the configuration of the battery module 100 of FIG. 3, the bus bar assembly 130 may be included instead of the rear plate 124.

Furthermore, the bus bar assembly 130 may be positioned at the open portion of the battery module 100, for example the front side. In addition, the bus bar assembly 130 may have a slit to allow the electrode lead 111 to pass therethrough. Therefore, through the slit, the gas or spark inside the module may be discharged to the outside of the module. At this time, the gas discharge direction may be regarded as being the same as the +Y-axis direction in the drawing.

The duct 200 is provided to at least one side of the battery module 100. In particular, the duct 200 may be located at the side where the gas is discharged from the battery module 100. That is, as described above, the battery module 100 may be configured such that, when gas is generated therein, the generated gas is discharged only in a specific direction. At this time, the duct 200 may be located at a portion where gas is to be discharged from the battery module 100.

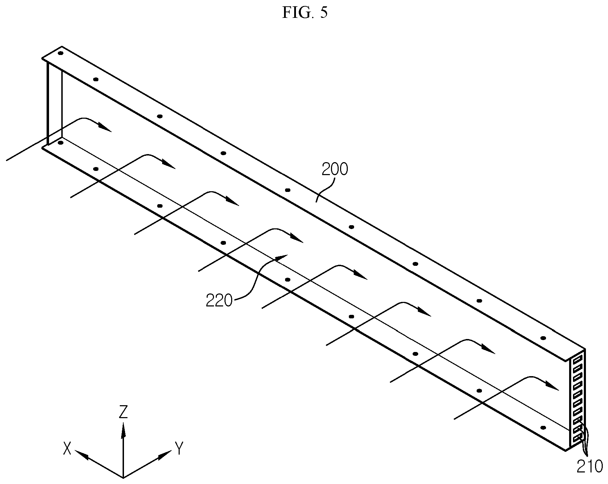

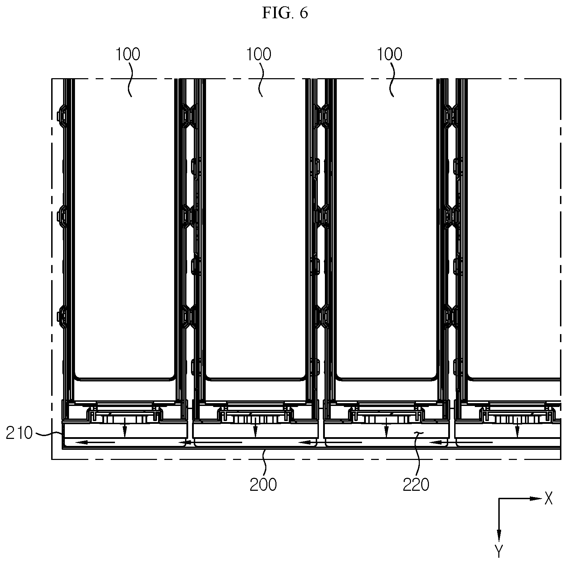

For example, seeing the embodiment of FIG. 2, when the +Y-axis direction is a front direction, in a state where the plurality of battery modules 100 are arranged such that the bus bar assembly 130 faces forward, the duct 200 may be located at the front side of the battery module 100. Accordingly, when gas is generated in the battery module 100, the generated gas may be discharged to the front side of the battery module 100. In addition, the gas discharged as above may be introduced into the duct 200. The configuration of the duct 200 will be described in more detail with reference to FIGS. 5 and 6 further.

FIG. 5 is a perspective view showing the duct 200 in the battery pack shown in FIGS. 1 and 2, which is viewed in a different direction. **In** particular, in FIG. 5, other components than the duct 200, for example the battery module 100 or the opening/closing member 300 are not depicted. Also, FIG. 6 is a diagram schematically showing a gas discharge flow direction in the battery pack according to an embodiment of the present disclosure, which is viewed from an upper side of the battery pack. **In** FIG. 6, only a part of the battery pack is depicted, and the opening/closing member 300 is not depicted.

Referring to FIGS. 5 and 6, the duct 200 has a discharge hole 210 and may have an inlet hole 220. Here, the inlet hole 220 may be configured to open at least a portion of the duct 200. In particular, the inlet hole 220 may be configured to face the battery module 100 (in the -Y-axis direction of FIG. 5). In addition, the discharge hole 210 may be configured to open at least a portion of the duct 200, like the inlet hole 220, but may be disposed in a different direction from the inlet hole 220. In particular, the discharge hole 210 may be configured to face a direction in which the battery module 100 is not located. For example, as shown in the drawings, the discharge hole 210 may be configured to be formed at an end of the duct 200 in the -X-axis direction.

In this configuration, when gas is generated from the battery module 100, the generated gas may be introduced into the inner space of the duct 200 through the inlet hole 220. At this time, the internal pressure of the duct 200 may increase. Here, since the discharge hole 210 is formed at one side of the duct 200, the gas inside the duct 200 may move toward the discharge hole 210. That is, the duct 200 is configured such that the gas generated from the battery module 100 flows toward the discharge hole 210, as indicated by arrows in FIGS. 5 and 6.

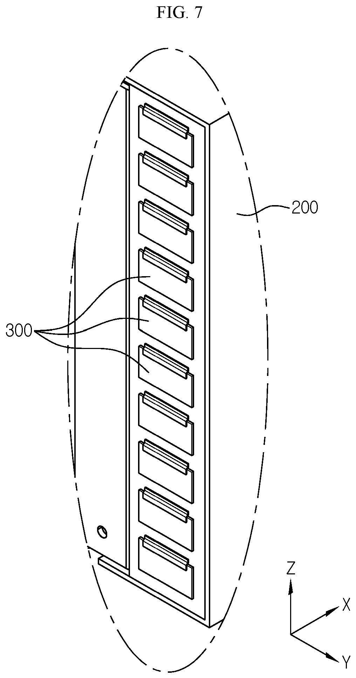

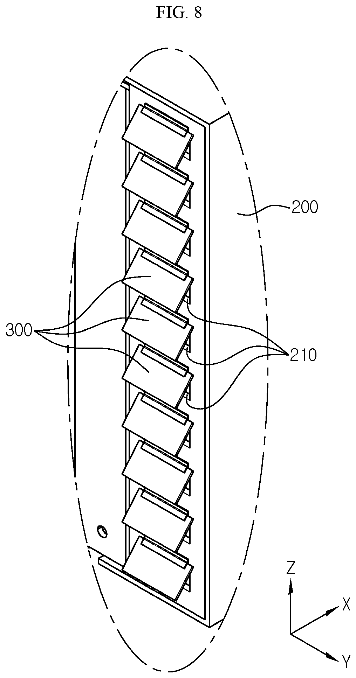

The opening/closing member 300 is located at the discharge hole 210 of the duct 200. In addition, the opening/closing member 300 is configured to open and close the discharge hole 210 of the duct 200. The opening/closing member 300 will be described in more detail with reference to FIGS. 7 and 8 further.

FIG. 7 is an enlarged view showing a portion A1 of FIG. 1, and FIG. 8 is a diagram showing that the opening/closing member 300 is opened in the configuration of FIG. 7.

The opening/closing member 300 may close the duct 200 as shown in FIG. 7 or open the duct 200 as shown in FIG. 8 through the opening/closing operation. In particular, the opening/closing member 300 is configured to open the discharge hole 210 when the internal pressure of the duct 200 is above a certain level. Accordingly, in a normal state where gas or the like is not generated, the opening/closing member 300 may exist in a closed state as shown in FIG. 7. However, when gas is generated from the battery module 100 and flows into the space inside the duct 200, the internal pressure of the duct 200 may increase to a certain level or above. In addition, in this case, the opening/closing member 300 may be operated to open the discharge hole 210 of the duct 200 as shown in FIG. 8. Here, the magnitude of the internal pressure to change the opening/closing member 300 into an open form may be appropriately designed according to various factors such as the type of the battery module 100 or the specification or type of the battery pack, and the shape or structure of the duct 200.

Meanwhile, the opening/closing member 300 is configured to close the discharge hole 210 when the internal pressure of the duct 200 is below a certain level. In particular, when gas is generated from the battery module 100 so that the internal pressure of the duct 200 increases and then the gas is discharged to the discharge hole 210 so that the internal pressure of the duct 200 falls below a certain level, the opening/closing member 300 may be changed from the opened state of FIG. 8 to the closed state of FIG. 7 again.

According to this configuration of the present disclosure, when gas is generated due to a situation such as thermal propagation inside the battery pack, the gas may be smoothly discharged to the outside through the duct 200. Accordingly, it is possible to prevent high-temperature gas from continuously staying inside the battery pack, and also it is possible to lower the pressure inside the battery pack to prevent fire or explosion of the battery pack.

The opening/closing member 300 may include an elastic member to perform the opening/closing operation. For example, the opening/closing member 300 may include an elastic member such as a spring, and may be configured to open and close using the elastic force of the spring, namely the restoring force. As an example, the opening/closing member 300 may include a spring such as a leaf spring or a coil spring. At this time, the opening/closing member 300 may be configured to elastically deform when being changed from a closed state to an opened state. Therefore, the opening/closing member 300 may come into an opened state when the force by the internal pressure of the duct 200 becomes greater than the force by the spring, and may come into a closed state when the force by the internal pressure of the duct 200 becomes smaller than the force by the spring.

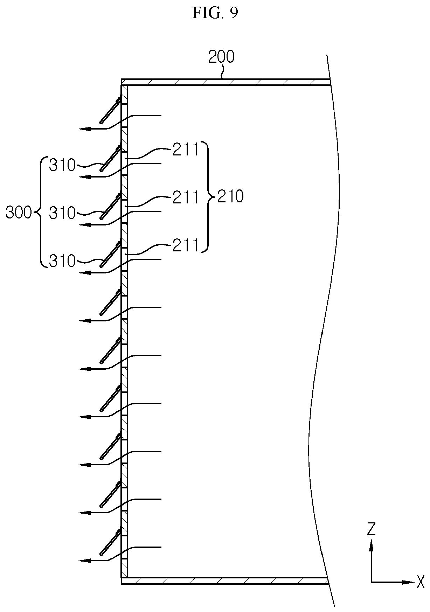

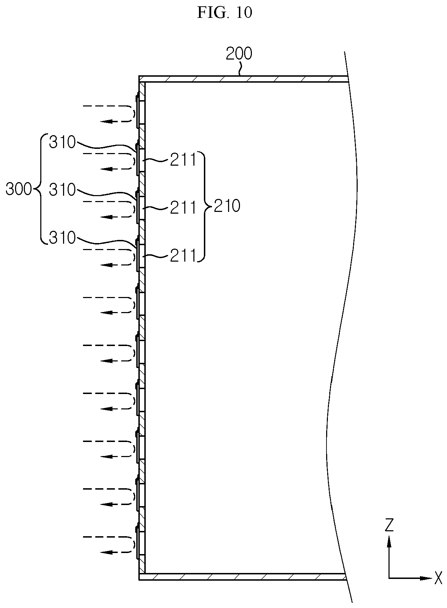

In particular, in the battery pack according to the present disclosure, the opening/closing member 300 is configured to block the inflow of gas at the outside of the duct 200 into the duct 200 in a closed state. Moreover, the opening/closing member 300 may block the inflow of oxygen at the outside of the duct 200 into the duct 200 in a closed state. This will be described in more detail with reference to FIGS. 9 and 10.

FIG. 9 is a diagram schematically showing a gas discharging configuration in a state where the opening/closing member 300 is opened in the battery pack according to an embodiment of the present disclosure. Also, FIG. 10 is a diagram schematically showing an external gas blocking configuration in a state where the opening/closing member 300 is closed in the battery pack according to an embodiment of the present disclosure.

First, referring to FIG. 9, when high-temperature gas exists in the duct 200 in a certain pressure level or above, the opening/closing member 300 may be opened, whereby the gas inside the duct 200 may be discharged to the outside as indicated by a solid arrow. At this time, due to the pressure of the gas discharged from the inside of the duct 200 to the outside, the gas at the outside of the duct 200 cannot be introduced into the discharge hole 210.

Next, referring to FIG. 10, in a state where the opening/closing member 300 is closed, the gas at the outside of the duct 200 is blocked from flowing into the duct 200 by the opening/closing member 300, as indicated by a dotted arrow. In particular, the gas at the outside of the duct 200 may contain oxygen. Therefore, as the opening/closing member 300 is closed, oxygen existing at the outside of the duct 200 may also be blocked from flowing into the duct 200.

Therefore, according to this configuration of the present disclosure, by blocking the inflow of oxygen into the duct 200, it is possible to effectively prevent a fire from occurring inside the battery pack. In particular, heat sources such as sparks and combustibles such as gas or battery components may exist inside the battery pack. However, if the inflow of oxygen is blocked as in this embodiment, one of the three elements of combustion does not exist inside the battery pack, so it is possible to prevent a fire from occurring inside the battery pack in advance.

In the battery pack according to the present disclosure, the discharge hole 210 formed in the duct 200 may include a plurality of openings 211 as shown in FIGS. 9 and 10. That is, the discharge hole 210 may be formed as a plurality of openings 211. The opening/closing member 300 may also include a plurality of unit opening/closing portions 310. In this case, each unit opening/closing portions 310 may be positioned at each opening 211 and configured to perform an opening/closing operation for each opening 211.

According to this configuration of the present disclosure, the gas discharge operation (opening) or the oxygen inflow blocking operation (closing) of the discharge hole 210 may be performed more quickly and reliably. In particular, in this case, the weight and/or movement distance of each opening/closing member 300 may be reduced. Accordingly, the opening/closing member 300 may perform an opening operation and a closing operation more quickly.

For example, the opening/closing member 300 may be configured such that one side is coupled to a component such as the duct 200 and the other side performs an opening/closing operation by moving away from and close to the discharge hole 210 of the duct 200, as shown in FIGS. 9 and 10. As a more specific example, referring to the configuration of FIGS. 7 to 10, each unit opening/closing portion 310 may be configured in a hinge-rotatable form such that an upper side is coupled to the duct 200 and a lower side makes rotational movement.

In this configuration, as the size of the opening/closing member 300 is smaller, the rotation radius at which the opening/closing member 300 moves to open and close the discharge hole 210 may be smaller. Therefore, in this case, a faster opening/closing operation may be made. Moreover, after the gas is discharged from the duct 200, when the internal pressure of the duct 200 is lowered to a certain level or below again, the opening/closing member 300 needs to block the inflow of external oxygen by a quick closing operation. Here, according to this configuration, since the rotation radius of each unit opening/closing portion 310 may be reduced, it may be possible to more rapidly block the inflow of oxygen. In addition, according to this configuration, even though the area of each opening 211 may be reduced, since a plurality of openings 211 are provided, the summed area for the plurality of openings 211 may be increased, so that the gas discharge performance may be secured in a certain level or above.

Moreover, according to the embodiment as described above, it may be easy to individually configure or set each opening 211 or each unit opening/closing portion 310. Accordingly, the gas releasing effect or the oxygen blocking effect may be implemented more efficiently.

In addition, in the embodiment in which the opening/closing member 300 includes a plurality of unit opening/closing portions 310 as described above, the opening/closing member 300 may be configured to open each opening 211 at a different pressure level with respect to the at least two unit opening/closing portions 310.

For example, at least some unit opening/closing portions 310 among the plurality of unit opening/closing portions 310 may be configured to open at an internal pressure level of P1 [psi] or above, and at least some unit opening/closing portions 310 among the other unit opening/closing portions 310 may be configured to open at an internal pressure level of P2 [psi] or above. Here, P1 and P2 are different pressure values.

According to this configuration of the present disclosure, by allowing at least some unit opening/closing portions 310 t to be set to have different opening pressure levels, gas discharge and/or oxygen blocking performance may be achieved more effectively. Moreover, depending on the location of the opening 211, the pressure at which gas is discharged or the degree of oxygen inflow may vary, but according to this embodiment, a more adaptive response may be possible according to each situation. For example, for an opening 211 where a relatively large amount of gas is discharged or a lot of oxygen may be introduced, the unit opening/closing portion 310 may be configured open at a relatively high internal pressure level, compared to other openings 211.

In particular, as shown in the former several drawings, the plurality of openings 211 forming the discharge hole 210 may be arranged in a vertical direction. In addition, the opening/closing member 300 is configured such that a unit opening/closing portion 310 located at an upper side among the at least two unit opening/closing portions 310 opens the opening 211 at a level higher pressure than the unit opening/closing portion 310 located at a lower side.

For example, as shown in FIGS. 9 and 10, when the plurality of unit opening/closing portions 310 are arranged to open and close the plurality of openings 211, respectively, the opening/closing portion located at an upper side based on the center of the vertical direction may be configured to open when the gas is discharged with a higher pressure than the opening/closing portion located at a lower side.

According to this configuration of the present disclosure, the opening/closing performance may be more uniformly maintained for the plurality of unit opening/closing portions 310 arranged in a vertical direction. In particular, the gas discharged from the inside of the battery module 100 is often at a high temperature, and the high-temperature gas may be located more at the upper portion inside the duct 200 rather than at the lower portion. Accordingly, a greater force may be applied to the unit opening/closing portion 310 located at the upper side than to the unit opening/closing portion 310 located at the lower side. However, when this force is applied several times or more, the restoring force of the unit opening/closing portion 310 located at the upper side may be lowered compared to that of the unit opening/closing portion 310 located at the lower side. In addition, after the internal gas is discharged, the lowered restoring force may deteriorate the speed or force of the unit opening/closing portion 310 located at the upper side to close the opening 211, which may cause a problem, for example deteriorating the oxygen blocking performance or the like.

However, according to this embodiment, since the elastic modulus of the unit opening/closing portion 310 located at the upper side is increased, it is possible to prevent the performance of the unit opening/closing portion 310 located at the upper side to close the opening 211 from being reduced compared to the unit opening/closing portion 310 located at the lower side. Therefore, in this case, the performance such as oxygen blocking for the plurality of openings 211 may be kept more constant.

Moreover, in this embodiment, each of the plurality of unit opening/closing portions 310 may have an elastic member. In addition, the unit opening/closing portion 310 located at the upper side among the at least two unit opening/closing portions 310 included in the plurality of unit opening/closing portions 310 may be configured to include an elastic member having a higher elastic modulus, compared to the unit opening/closing portion 310 located at the lower side.

For example, each of the plurality of unit opening/closing portions 310 may include an elastic member to open and close the corresponding opening 211. At this time, the unit opening/closing portion 310 located at the upper side based on the central portion in the vertical direction may include an elastic member having a higher elastic modulus, compared to the unit opening/closing portion 310 located at the lower side.

As a more specific example, when ten unit opening/closing portions 310 are arranged in the vertical direction so that each unit opening/closing portion 310 has a spring, five unit opening/closing portions 310 at the upper side may be configured to have a higher spring constant than five unit opening/closing portions 310 located at the lower side. As another example, when ten unit opening/closing portions 310 are arranged in the vertical direction, the spring constant of each spring may be gradually increased from the bottom to the top.

According to this configuration of the present disclosure, even with a simple configuration, the gas discharge performance and the oxygen blocking performance of the unit opening/closing portions 310 arranged in the vertical direction may be more stably secured.

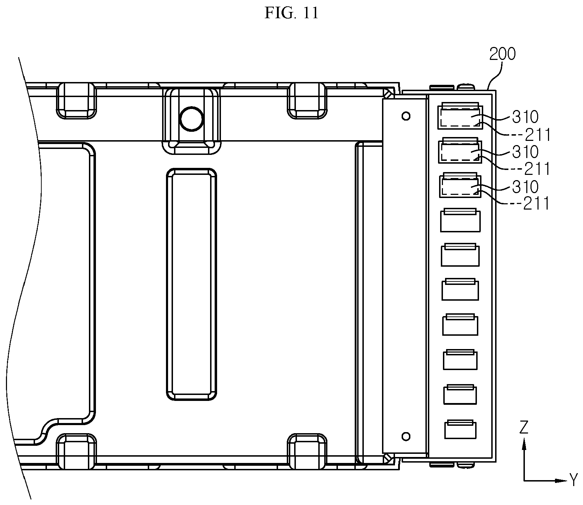

FIG. 11 is a diagram schematically showing some components of a battery pack according to another embodiment of the present disclosure. With respect to this embodiment, features different from those of the former embodiments will be described in detail, and features substantially identical or similar to those of the former embodiments will not be described in detail again.

Referring to FIG. 11, a plurality of openings 211 may be arranged in a vertical direction in the duct 200, and at least two openings 211 may be configured to have different sizes. In addition, to correspond to the sizes of the openings 211, the opening/closing members 300 respectively covering the openings 211 may also be configured to have different sizes.

In particular, with respect to at least two openings 211, the area of the opening 211 located at an upper side may be relatively larger than the area of the opening 211 located at a lower side. For example, as shown in FIG. 11, the openings 211 arranged in the vertical direction may be configured to have sizes gradually increasing from the bottom to the top. In this case, the unit opening/closing portions 310 may also be configured to have sizes gradually increasing from the bottom to the top.

According to this configuration of the present disclosure, it is possible to stably secure the gas discharge performance through the plurality of openings 211. In particular, at the lower side of the duct 200, the density of the high-temperature gas may be lower than that at the upper side. According to this embodiment, in the opening 211 located at the lower side, the gas may be discharged to the outside even with a small internal pressure due to the small area. Therefore, the gas existing in the inner space of the duct 200 may be uniformly discharged to the outside at both the upper and lower positions.

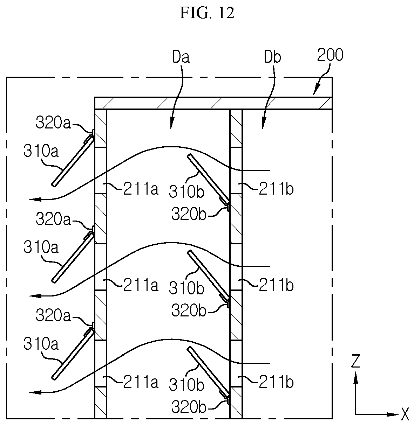

FIG. 12 is a cross-sectional view schematically showing some components of a battery pack according to still another embodiment of the present disclosure. In this embodiment, also, features different from those of the former embodiments will be described in detail.

Referring to FIG. 12, the opening/closing member 300 may be configured such that a plurality of unit opening/closing portions 310 different from each other are positioned in a gas discharge direction. In particular, in FIG. 12, the opening/closing member 300 is formed doubly in the left and right directions, and the configuration of the opening/closing member 300 may be configured in other multiple forms such as triple or quadruple. In addition, the unit opening/closing portions 310 may be configured to open and close different openings 211, respectively. Accordingly, the discharge holes 210 may also be configured such that different openings 211 are located in the gas discharge direction.

More specifically, in the configuration of FIG. 12, the discharge hole 210 may have at least one outer opening 211a and at least one inner opening 211b. Here, the outer side may be regarded as a direction toward the outside of the duct 200, particularly the outside of the battery pack to which the gas is discharged. In addition, the opening/closing member 300 may include at least one outer opening/closing portion 310a and at least one inner opening/closing portion 310b. In this case, the duct 200 may be divided into a space (inner duct) inside the inner opening 211b as indicated by Db and a space (outer duct) between the inner opening 211b and the outer opening 211a as indicated by Da.

In this configuration, if the gas generated from the battery module 100 flows into the inner space of the duct 200, particularly the inner duct Db indicated by Db, to increase the internal pressure, the inner opening/closing portion 310b may be opened first. In addition, if the gas passing through the inner opening 211b flows into the outer duct indicated by Da to increase the internal pressure, the outer opening/closing portion 310a may be opened. In addition, if both the inner opening/closing portion 310b and the outer opening/closing portion 310a are opened as described above, the gas inside the duct 200 may be discharged to the outside of the duct 200 as indicated by an arrow in FIG. 12.

According to this embodiment configuration, the oxygen inflow blocking performance may be further improved. In particular, in this embodiment, the opening/closing member 300 is located in multiple in the gas discharge direction, and the inflow of oxygen into the duct 200 may be more reliably blocked by the multiple opening/closing members 300.

In particular, in this embodiment, the outer opening/closing portion 310a and the inner opening/closing portion 310b may be configured to open and close in different forms.

For example, as shown in FIG. 12, the outer opening/closing portion 310a and the inner opening/closing portion 310b may be configured such that the coupled portion and the moving portion are provided in different positions, particularly opposite positions. For example, as shown in the drawing, the outer opening/closing portion 310a may be configured such that the upper end is coupled to the duct 200 as a central axis and the lower end rotates to perform an opening/closing operation. Meanwhile, the inner opening/closing portion 310b may be configured such that the lower end is coupled to the duct 200 as a central axis and the upper end rotates to perform an opening/closing operation.

According to this configuration of the present disclosure, the inflow path of oxygen may not be formed in a straight line but may be formed in a curved or bent shape. Therefore, in this case, the inflow of oxygen may be blocked more reliably.

Also, the outer opening/closing portion 310a and the inner opening/closing portion 310b may be configured to open the openings 211 in different pressure levels. In particular, the inner opening/closing portion 310b may be configured to open the opening 211 in a higher pressure level than the outer opening/closing portion 310a.

For example, when the outer opening/closing portion 310a and the inner opening/closing portion 310b are configured to include leaf springs 320a, 320b as elastic members as shown in FIG. 12, the inner opening/closing portion 310b may be configured to include a spring having a higher spring constant than the outer opening/closing portion 310a. That is, the leaf spring 320b of the inner opening/closing portion 310b may be configured to have a higher spring constant than the leaf spring 320a of the outer opening/closing portion 310a.

According to this configuration of the present disclosure, when the gas is discharged from the duct 200 to the outside, the inner opening/closing portion 310b may be closed first. Accordingly, since the inner opening/closing portion 310b is first closed while the gas is discharged from the outer duct Da to the outside of the duct 200, it is possible to more reliably block the oxygen at the outside of the duct 200 from flowing into the inner duct Db. That is, according to this embodiment, the oxygen blocking performance may be further improved.

The opening/closing member 300 may be configured to be changed from a closed state to an opened state by moving only in one direction.

For example, as shown in FIGS. 9 and 10, the opening/closing member 300 may be configured to be changed to an opened state by moving only in an outer direction (-X-axis direction). In addition, the opening/closing member 300 may be configured not to move in an inner direction (+X-axis direction) anymore when being in the state of FIG. 10, namely, in the closed state.

In particular, the opening/closing member 300 may include a stopper to prevent further movement in the inner direction when being in a state of closing the opening 211, as shown in FIG. 10.

According to this configuration of the present disclosure, when the opening/closing member 300 is closed again after the gas inside the duct 200 is discharged to the outside as the opening/closing member 300 is opened, the closed state may be maintained more stably. In particular, according to this embodiment, when the opening/closing member 300 is changed from the opened state to the closed state, it is possible to more reliably block the inflow of oxygen or the like through the discharge hole 210.

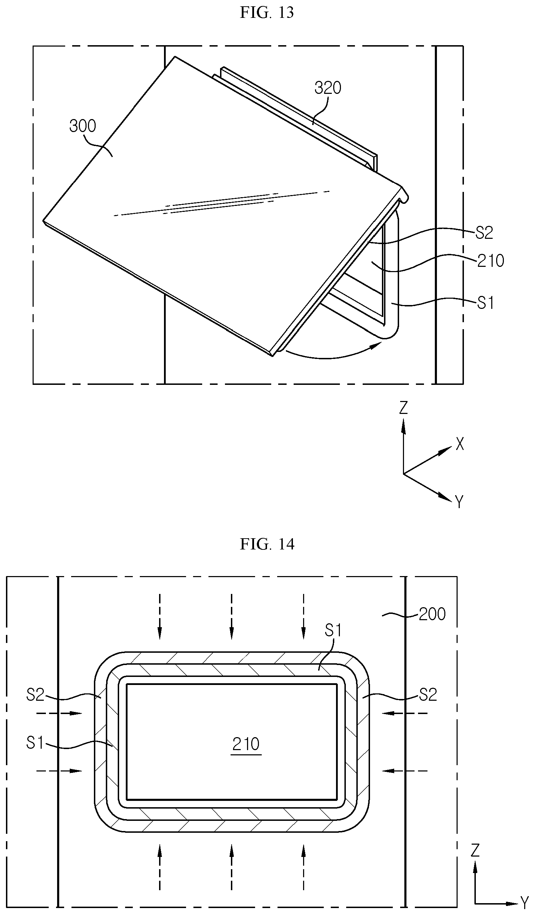

FIG. 13 is a perspective view schematically showing some components of a battery pack according to still another embodiment of the present disclosure. In this embodiment, also, features different from those of the former embodiments will be described in detail. Meanwhile, the discharge hole 210 and the opening/closing member 300 shown in FIG. 13 may be regarded as representing one opening 211 and one unit opening/closing portion 310 in the former embodiment.

Referring to FIG. 13, at least one of the duct 200 and the opening/closing member 300 may include a sealing portion S1, S2 in the form of surrounding the discharge hole 210. For example, when the discharge hole 210 is formed in a rectangular shape, the duct 200 may include a sealing portion (a first sealing portion S1) in the form of surrounding the outside of three corners or four corners among the four corners of the discharge hole 210. In addition, the opening/closing member 300 may include a sealing portion (a second sealing portion S2) in the form of surrounding at least a portion of the outer side of the discharge hole 210. For example, when the sealing portion is configured to surround the four corners of the discharge hole 210, the sealing portion may be regarded as being formed in a rectangular ring shape.

Here, when the opening/closing member 300 moves in the arrow direction by the restoring force of the leaf spring 320 to close the duct 200, the sealing portions S1, S2 may improve the sealing performance of the duct 200 by the opening/closing member 300. To this end, the sealing portions S1, S2 may be made of an elastic material such as rubber or polymer.

In particular, when both the sealing portion (the first sealing portion S1) of the duct 200 and the sealing portion (the second sealing portion S2) of the opening/closing member 300 are provided, the first sealing portion S1 and the second sealing portion S2 may be configured such that any one sealing portion is surrounded by the other sealing portion. This will be described in more detail with reference to FIG. 14.

FIG. 14 is a diagram schematically showing positions of the first sealing portion S1 and the second sealing portion S2, when the opening/closing member 300 closes the duct 200, in the configuration of FIG. 13. In FIG. 14, for convenience of explanation, other components of the opening/closing member 300 except for the sealing portions S1, S2 are not shown.

Referring to FIG. 14, both the first sealing portion S1 and the second sealing portion S2 may be configured to surround the opening 211 of the duct 200 at the periphery thereof. Moreover, the second sealing portion S2 and the first sealing portion S1 may be formed in different sizes so that any one sealing portion is surrounded by the other sealing portion. In FIG. 14, an embodiment in which the first sealing portion S1 is configured to be smaller than the second sealing portion S2 and surrounded by the second sealing portion S2 is shown.

According to this configuration of the present disclosure, when the opening/closing member 300 closes the discharge hole 210, the sealing force by the sealing portions S1, S2 may be further improved. That is, in a state where the opening/closing member 300 closes the discharge hole 210, in order for external oxygen to flow into the discharge hole 210, the external oxygen must move as indicated by the arrow in FIG. 14. However, since the sealing portion is provided doubly in the arrow direction, the inflow of external oxygen into the discharge hole 210 may be more reliably blocked.

Moreover, in this embodiment, the first sealing portion S1 and the second sealing portion S2 may be configured to contact each other as a whole. In this case, the sealing force may be further increased due to the elastic pressing force of the first sealing portion S1 and the second sealing portion S2. Therefore, in this case, the oxygen blocking effect may be further improved.

The battery pack according to an embodiment of the present disclosure may further include an oxygen absorbing member (not shown).

The oxygen absorbing member may be configured to include an oxygen absorbing material in the inner space thereof. Here, the oxygen absorbing member may employ various oxygen absorbing materials known at the time of filing of this application. The oxygen absorbing member may be attached to the duct 200 and/or the opening/closing member 300. In particular, the oxygen absorbing member may be located in the inner space of the duct 200. For example, the oxygen absorbing member may be attached to the inner surface of the duct 200. In this case, even if a small amount of oxygen is introduced into the inner space of the duct 200, the oxygen may be completely removed from the duct 200 by the oxygen absorbing member. Therefore, in this case, the possibility of fire may be further reduced because oxygen does not approach the heat source.

Moreover, in the embodiment of FIG. 12, the oxygen absorbing member may be attached to the outer surface of the inner opening/closing portion 310b. Alternatively, the oxygen absorbing member may be attached to the periphery of the inner opening 211b. For example, the oxygen absorbing member may be provided in the form of surrounding the outer circumference of the inner opening 211b. When a small amount of oxygen flows into the outer duct Da, there is a possibility that the oxygen may flow into the inner duct Db through the inner opening 211b. However, according to this embodiment, the oxygen may be more reliably removed by the oxygen absorbing member provided at the periphery of the inner opening 211b or the outer surface of the inner opening/closing portion 310b.

Meanwhile, in the above embodiments, it is described that the opening/closing member 300 performs the opening/closing operation in a hinge-pivoting manner, but the present disclosure is not necessarily limited to this opening/closing operation. For example, the opening/closing member 300 may be configured to open or close the discharge hole 210 by moving in a sliding manner. In addition, the opening/closing member 300 may be configured to perform the opening/closing operation by a separately provided motor or the like.

In addition, in the former various embodiments, it is shown and described that the duct 200 is formed only at one side of the battery pack, but the present disclosure is not necessarily limited to these embodiments.

For example, the duct 200 may be formed at both sides of the battery pack. As a more specific example, in the configuration of FIG. 1, the duct 200 may be provided at both a front side and a rear side of the battery module 100 in the X-axis direction. In particular, this configuration may be applied in all cases where the battery module 100 is configured so that gas generated therein can be discharged to both the front side and the rear side. Moreover, when the bus bar assembly 130 is provided at both the front and rear sides of the battery module 100, there is a possibility that gas inside the battery module 100 is discharged at both the front side and the rear side. Accordingly, in this case, the duct 200 may be regarded as including a front duct located at the front side of the battery module 200 and a rear duct located at the rear side of the battery module 200.

In addition, in this case, the opening/closing member 300 may be located at both the front duct and the rear duct. At this time, since several features related to the configuration of the opening/closing member 300 or the duct 200 as described above may be applied in the same or similar manner to this embodiment, and thus will not be described in detail again.

An energy storage system according to the present disclosure includes at least one battery pack according to the present disclosure. In particular, the energy storage system may include a plurality of battery packs according to the present disclosure in the form of being electrically connected to each other in order to have a large energy capacity. In addition, the energy storage system according to the present disclosure may further include other various components of the energy storage system known at the time of filing of this application. Moreover, the energy storage system may be used in various places or devices, such as a smart grid system or an electric charging station.

Meanwhile, in this specification, terms indicating directions such as "upper", "lower", "left", "right", "front", and "rear" are used, but these terms are just for convenience of explanation, and it is obvious to those skilled in the art that these terms may vary depending on the location of an object or the position of an observer.

The present disclosure has been described in detail. However, it should be understood that the detailed description and specific examples, while indicating preferred embodiments of the disclosure, are given by way of illustration only, since various changes and modifications within the scope of the appended claims will become apparent to those skilled in the art from this detailed description.

### Reference Signs

100: battery module
110: secondary battery
111: electrode lead
120: module case
121: upper plate, 122: lower plate, 123: side plate, 124: rear plate
130: bus bar assembly
131: bus bar housing, 132: module bus bar
200: duct
210: discharge hole
211: opening
211a: outer opening, 211b: inner opening
220: inlet hole
300: opening/closing member
310: unit opening/closing portion
310a: outer opening/closing portion, 310b: inner opening/closing portion
320, 320a, 320b: leaf spring
Da: outer duct, Db: inner duct
S1: first sealing portion, S2: second sealing portion

## Claims

1. A battery pack, comprising:
at least one battery module (100) having at least one secondary battery (110) and configured to store and release an energy;
a duct (200) provided to at least one side of the battery module (100) and having a discharge hole (210) and inlet hole (220) so that, when a gas is generated from the battery module (100), the generated gas flows toward the discharge hole (210); and
an opening/closing member (300) located in the discharge hole (210) of the duct (200),
wherein the opening/closing member (300) is configured to open the discharge hole (210) when an internal pressure of the duct (200) is above a predetermined level, and to close the discharge hole (210) and block the inflow of gas at the outside of the duct (200) into the duct (200) when the internal pressure of the duct (220) is below the predetermined level,
wherein said inlet hole (220) faces the battery module (100), and the discharge hole (210) faces a direction away from the battery module (100).

2. The battery pack according to claim 1,
wherein in a closed state, the opening/closing member (300) is configured to block the inflow of oxygen at the outside of the duct (200) into the duct (200).

3. The battery pack according to claim 1,
wherein the discharge hole (210) has a plurality of openings (211), and
the opening/closing member (300) has a plurality of unit opening/closing portions (310) so that the unit opening/closing portion (310) is located at each opening (211).

4. The battery pack according to claim 3,
wherein the opening/closing member (300) is configured such that at least two unit opening/closing portions (310) open the respective openings (211) at different pressure levels.

5. The battery pack according to claim 4,
wherein the plurality of openings (211) are arranged in a vertical direction, and
the opening/closing member (300) is configured such that a unit opening/closing portion (310) located at an upper side among the at least two unit opening/closing portions (310) opens the opening (211) in a higher pressure level than a unit opening/closing portion (310) located at a lower side.

6. The battery pack according to claim 5,
wherein the unit opening/closing portion (310) includes an elastic member, respectively, and the unit opening/closing portion (310) located at an upper side among the at least two unit opening/closing portions (310) is configured to include an elastic member having a higher elastic modulus than the unit opening/closing portion (310) located at a lower side.

7. The battery pack according to claim 1,
wherein the opening/closing member (310) includes an inner opening/closing portion (310b) and an outer opening/closing portion (310a).

8. The battery pack according to claim 1,
wherein in a closed state, the opening/closing member (310) is configured to move only in one direction to be changed into an opened state.

9. The battery pack according to claim 1,
wherein at least one of the duct (200) and the opening/closing member (300) has a sealing portion (S1, S2) formed to surround the periphery of the discharge hole (210).

10. An energy storage system, comprising the battery pack according to any one of claims 1 to 9.

## Patentansprüche

1. Batteriepack, umfassend:
mindestens ein Batteriemodul (100), das mindestens eine Sekundärbatterie (110) aufweist und ausgebildet ist, um eine Energie zu speichern und abzugeben;
einen Kanal (200), der an mindestens einer Seite des Batteriemoduls (100) bereitgestellt ist und eine Auslassbohrung (210) und eine Einlassbohrung (220) aufweist, so dass, wenn ein Gas von dem Batteriemodul (100) erzeugt wird, das erzeugte Gas zur Abgabebohrung (210) strömt; und
ein Öffnungs-/Schließteil (300), das sich in der Auslassbohrung (210) des Kanals (200) befindet,
wobei das Öffnungs-/Schließteil (300) ausgebildet ist, um die Auslassbohrung (210) zu öffnen, wenn ein Innendruck des Kanals (200) über einem vorbestimmten Niveau liegt, und die Auslassbohrung (210) zu schließen und das Einströmen von Gas an der Außenseite des Kanals (200) in den Kanal (200) zu blockieren, wenn der Innendruck des Kanals (220) unter dem vorbestimmten Niveau liegt,
wobei die Einlassbohrung (220) dem Batteriemodul (100) zugewandt ist und die Auslassbohrung (210) von dem Batteriemodul (100) abgewandt ist.

2. Batteriepack nach Anspruch 1,
wobei das Öffnungs-/Schließteil (300) in einem geschlossenen Zustand ausgebildet ist, um das Einströmen von Sauerstoff an der Außenseite des Kanals (200) in den Kanal (200) zu blockieren.

3. Batteriepack nach Anspruch 1,
wobei die Auslassbohrung (210) eine Vielzahl von Öffnungen (211) aufweist und
das Öffnungs-/Schließteil (300) eine Vielzahl von Einheitsöffnungs-/- schließabschnitten (310) aufweist, so dass sich der Einheitsöffnungs-/-schließabschnitt (310) an jeder Öffnung (211) befindet.

4. Batteriepack nach Anspruch 3,
wobei das Öffnungs-/Schließteil (300) so ausgebildet ist, dass mindestens zwei Einheitsöffnungs-/-schließabschnitte (310) die jeweiligen Öffnungen (211) bei unterschiedlichen Druckniveaus öffnen.

5. Batteriepack nach Anspruch 4,
wobei die Vielzahl von Öffnungen (211) in einer vertikalen Richtung angeordnet ist, und
wobei das Öffnungs-/Schließteil (300) so ausgebildet ist, dass ein Einheitsöffnungs-/-schließabschnitt (310), der sich unter den mindestens zwei Einheitsöffnungs-/- schließabschnitten (310) an der Oberseite befindet, die Öffnung (211) bei einem höheren Druckniveau öffnet als ein Einheitsöffnungs-/-schließabschnitt (310), der sich an der Unterseite befindet.

6. Batteriepack nach Anspruch 5,
wobei der Einheitsöffnungs-/-schließabschnitt (310) jeweils ein elastisches Teil einschließt und der Einheitsöffnungs-/-schließabschnitt (310), der sich unter den mindestens zwei Einheitsöffnungs-/-schließabschnitten (310) an einer Oberseite befindet, ausgebildet ist, um ein elastisches Teil einzuschließen, das einen höheren Elastizitätsmodul aufweist, als der Einheitsöffnungs-/-schließabschnitt (310), der sich an einer Unterseite befindet.

7. Batteriepack nach Anspruch 1,
wobei das Öffnungs-/Schließteil (310) einen inneren Öffnungs-/Schließabschnitt (310b) und einen äußeren Öffnungs-/Schließabschnitt (310a) einschließt.

8. Batteriepack nach Anspruch 1,
wobei das Öffnungs-/Schließteil (310) in einem geschlossenen Zustand ausgebildet ist, um sich nur in eine Richtung zu bewegen, um in einen geöffneten Zustand überzugehen.

9. Batteriepack nach Anspruch 1,
wobei mindestens eines von dem Kanal (200) und dem Öffnungs-/Schließteil (300) einen Dichtungsabschnitt (S1, S2) aufweist, der ausgebildet ist, um den Umfang der Auslassbohrung (210) zu umgeben.

10. Energiespeichersystem, das das Batteriepack nach einem der Ansprüche 1 bis 9 umfasst.

## Revendications

1. Bloc-batterie, comprenant :
au moins un module de batterie (100) présentant au moins une batterie secondaire (110) et configuré pour stocker et libérer une énergie ;
un conduit (200) disposé sur au moins un côté du module de batterie (100) et présentant un orifice de décharge (210) et un orifice d'admission (220) de
sorte que, lorsqu'un gaz est généré à partir du module de batterie (100), le gaz généré s'écoule vers l'orifice de décharge (210) ; et
un organe d'ouverture/fermeture (300) situé dans l'orifice de décharge (210) du conduit (200),
dans lequel l'organe d'ouverture/fermeture (300) est configuré pour ouvrir l'orifice de décharge (210) lorsqu'une pression interne du conduit (200) est au-dessus d'un niveau prédéterminé, et pour fermer l'orifice de décharge (210) et bloquer l'écoulement entrant de gaz au niveau de l'extérieur du conduit (200) jusque dans le conduit (200) lorsque la pression interne du conduit (220) est au-dessous du niveau prédéterminé,
dans lequel ledit
orifice d'admission (220) fait face au module de batterie (100), et l'orifice de décharge
(210) fait face à une direction s'éloignant du module de batterie (100).

2. Bloc-batterie selon la revendication 1,
dans lequel, dans un état fermé, l'organe d'ouverture/fermeture (300) est configuré pour bloquer l'écoulement entrant d'oxygène au niveau de l'extérieur du conduit (200) jusque dans le conduit (200).

3. Bloc-batterie selon la revendication 1,
dans lequel l'orifice de décharge (210) présente une pluralité d'ouvertures (211), et
l'organe d'ouverture/fermeture (300) présente une pluralité de parties unitaires d'ouverture/fermeture (310) de telle sorte que la partie unitaire d'ouverture/fermeture (310) est située au niveau de chaque ouverture (211).

4. Bloc-batterie selon la revendication 3,
dans lequel l'organe d'ouverture/fermeture (300) est configuré de telle sorte qu'au moins deux parties unitaires d'ouverture/fermeture (310) ouvrent les ouvertures (211) respectives à des niveaux de pression différents.

5. Bloc-batterie selon la revendication 4,
dans lequel la pluralité d'ouvertures (211) sont agencées dans une direction verticale, et
l'organe d'ouverture/fermeture (300) est configuré de telle sorte qu'une partie unitaire d'ouverture/fermeture (310) située au niveau d'un côté supérieur parmi les au moins deux parties unitaires d'ouverture/fermeture (310) ouvre l'ouverture (211) dans un niveau de pression supérieur à celui d'une partie unitaire d'ouverture/fermeture (310) située au niveau d'un côté inférieur.

6. Bloc-batterie selon la revendication 5,
dans lequel la partie unitaire d'ouverture/fermeture (310) inclut un élément élastique, respectivement, et la partie unitaire d'ouverture/fermeture (310) située au niveau d'un côté supérieur parmi les au moins deux parties unitaires d'ouverture/fermeture (310) est configurée pour inclure un élément élastique présentant un module élastique supérieur à celui de la partie unitaire d'ouverture/fermeture (310) située au niveau d'un côté inférieur.

7. Bloc-batterie selon la revendication 1,
dans lequel l'organe d'ouverture/fermeture (310) inclut une partie interne d'ouverture/fermeture (310b) et une partie externe d'ouverture/fermeture (310a).

8. Bloc-batterie selon la revendication 1,
dans lequel, dans un état fermé, l'organe d'ouverture/fermeture (310) est configuré pour se déplacer uniquement dans une direction pour être changé en un état ouvert.

9. Bloc-batterie selon la revendication 1,
dans lequel au moins l'un parmi le conduit (200) et de l'organe d'ouverture/fermeture (300) présente une partie d'étanchéité (S1, S2) formée pour entourer la périphérie de l'orifice de décharge (210).

10. Système de stockage d'énergie, comprenant le bloc-batterie selon l'une quelconque des revendications 1 à 9.
